# EUROPEAN PATENT APPLICATION

(11) **EP 2 184 485 A2**
(43) Date of publication of application: **12.05.2010**
(21) Application number: 09174269.2
(22) Date of filing: 28.10.2009
(51) Int. Cl.: F03D 11/00

(54) **Apparatus for detecting ice or snow build-up on a wind turbine blade**

(30) Priority: 05.11.2008 US 265052
(71) Applicant: General Electric Company, Schenectady, NY 12345 (US)
(72) Inventor: Klausmann, Philipp, D-73479, Ellwangen (DE); Honekamp, Thorsten, D-49824, Emlichheim (DE)
(74) Representative: Bedford, Grant Richard

(57) **Abstract**

An apparatus (10) according to an embodiment comprises a wind turbine (100) with a hub (104) supporting a blade (105), and a sensor (20) disposed and configured to monitor the blade (105) and to produce a respective output signal (21). A computer processor (30) disposed and configured to receive the output signal (21) of the sensor (20) executes a computer software application to facilitate comparing the output signal (21) to a predetermined value to determine whether solid water is present at the blade (105) and providing an indication of solid water build-up when solid water is present.

## Description

The invention relates generally to wind turbines. More specifically, the invention relates to detection of ice and snow on wind turbine blades.

Under some conditions, snow and ice can build up on wind turbine blades. The build-up of ice and/or snow on wind turbine blades adversely affects performance of the wind turbine due to the extra weight of the snow and/or ice and alteration of the aerodynamic profiles of the blades.

A current technique for ice detection employs an indirect analysis using wind speed as measured by two anemometers, one of which is heated. Another technique compares actual power coefficient and actual power values with expected values. However, these techniques do not detect ice and/or snow in regimes in which such detection is desirable, resulting in a shorter operating season.

An apparatus according to one embodiment of the present invention comprises a wind turbine with a hub supporting a blade, and a sensor disposed and configured to monitor the blade and to produce a respective output signal. A computer processor disposed and configured to receive the output signal of the sensor executes a computer software application to facilitate comparing the output signal to a predetermined value to determine whether solid water is present at the blade and providing an indication of solid water build-up when solid water is present.

According to an embodiment, a system is disclosed comprising a wind turbine comprising a hub supporting a blade and a sensor disposed and configured to monitor the blade and to produce a respective output signal. A computer is disposed and configured to receive data carried by the output signal from the sensor, to compare the data to a predetermined value to determine whether solid water is present at the blade, and to provide an indication of solid water build-up when solid water is present at the blade.

Various aspects and embodiments of the present invention will now be described in connection with the accompanying drawings, in which:
FIG. 1 is a schematic representation of an apparatus according to an embodiment of the invention.
FIG. 2 is a schematic isometric view of a wind turbine with various example installations according to an embodiment of the invention.
FIG. 3 is a schematic flow chart of a method according to an embodiment of the invention.

With reference to the accompanying Figures, examples of a solid water, i.e. snow and ice, build-up monitoring apparatus and method according to embodiments of the invention are disclosed. For purposes of explanation, numerous specific details are shown in the drawings and set forth in the detailed description that follows in order to provide a thorough understanding of embodiments of the invention. It will be apparent, however, that embodiments of the invention may be practiced without these specific details. In other instances, well-known structures and devices are schematically shown in order to simplify the drawing.

A wind turbine blade and solid water, such as snow and ice, have characteristics that can be monitored to determine when solid water build-up is present. The characteristics include, but are not limited to, spectral reflectance, spectral albedo, temperature, and dielectric absorption. For example, the wind turbine blade with no build-up present has reflective characteristics that can serve as reference points or expected values. When build-up forms, the blade with build-up will have different reflective characteristics from the bare surface of the blade. Thus, by comparing the actual reflective characteristics of the vicinity of the blade surface to expected values for the bare surface, build-up can be detected. Additionally, the type and/or thickness of build-up can be determined from variations in the actual values since ice has characteristics that are different from those of snow, and the characteristics of ice and snow will vary with thickness, moisture content, density, and structure of the actual build-up.

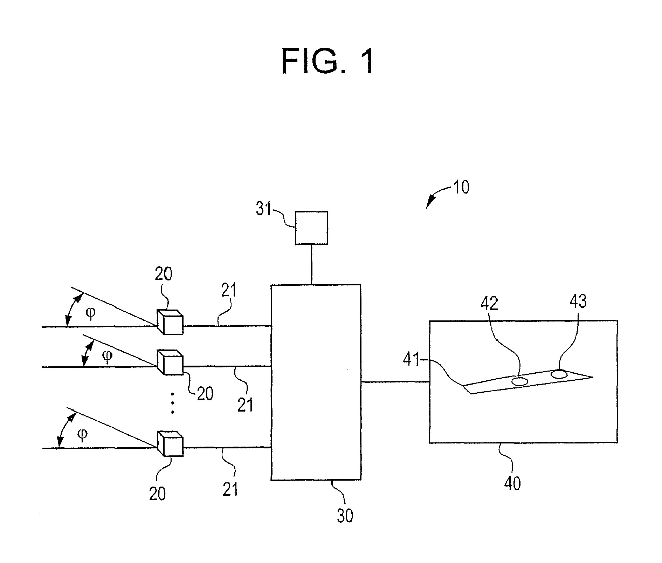

As seen schematically in FIG. 1, a solid water build-up detection apparatus 10 in an embodiment includes an electromagnetic radiation sensor 20 configured to monitor a wind turbine blade. The sensor 20 has a field of view ϕ expressed, for example, in degrees and produces an output signal 21 indicative of a radiation-related characteristic, such as, but not limited to, reflectivity or reflectance. A computer processor 30, such as a microprocessor, receives the output signal 21 of the sensor 20. The computer processor 30 compares the output signal 21 to a predetermined value to determine whether solid water build-up, such as an accumulation of ice and/or snow, is present in the field of view ϕ. For example, if an infrared sensor is used, then the output signal 21 in an embodiment is indicative of a characteristic of the vicinity of the surface of the blade 105. In an embodiment, the characteristic is a degree of reflection from the vicinity of the surface of the blade 105 as can be measured, for example, by changes in energy or frequency of radiation received by the sensor from the vicinity of the surface, or by intensity of radiation received. If the reflectance is above a predetermined level or predefined criteria, such as energy or frequency of the reflected ray, then ice and/or snow is present. Since ice and snow have different reflective properties, using more than one predetermined level can distinguish between ice and snow build-up on the blade(s) 105. In addition snow and/or ice thickness can be determined and a coating of a thickness below a predefined level, such as, for example, from about 0.2mm to about 3.0mm, can be ignored/Alternatively, the output signal in an embodiment is indicative of a surface temperature of the wind turbine blade 105. If the temperature is below a certain level, then ice and/or snow are likely to be present.

The computer processor 30 provides an indication of the presence of solid water build-up when such is present. In an embodiment, the indication is an alarm 31, such as an audible or visual alarm, and can include an automatic shut down of the wind turbine 100 as well as a notification of the presence of solid water build-up and/or the shut down, such as via e-mail, radio transmission, or other communications methods.

In another embodiment, the computer processor 30 is connected to a graphical display 40, such as a flat panel or CRT display, and the indication takes the form of a graphical representation 41 of the output signal 21 superimposed over an image of the monitored blade(s). Additionally, the computer processor 30 in embodiments enhances the graphical representation 41 of the output signal 21 in areas where solid water build-up is detected. For example, one or more visual cues 42, 43, such as color, can be used to indicate where solid water build-up has been detected. Different cues can be used to indicate the different types of solid water build-up, i.e. ice vs. snow. For example, a first color can be used to indicate ice build-up while a second color can be used to indicate snow build-up.

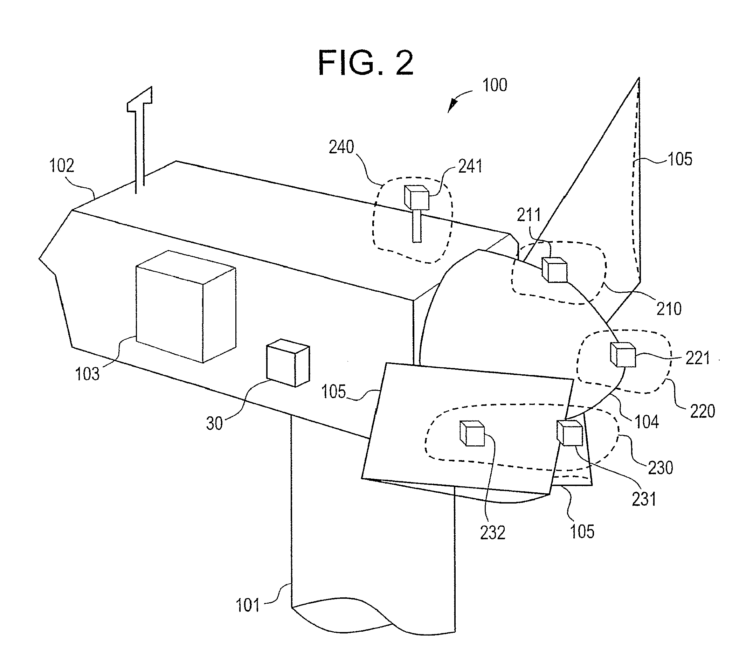

Referring to FIG. 2, an example wind turbine 100 includes a support 101, such as a tower, and a nacelle 102 mounted on the support 101. The nacelle 102 houses equipment 103, such as power generation, monitoring, and mechanical transmission equipment. In addition, the nacelle 102 can house the computer processor of embodiments. A hub 104 is supported by the nacelle 102 for rotation relative to the nacelle 102. At least two wind turbine blades 105 project from the hub 104 and are configured to rotate the hub 104 in response to wind passing over the blades 105, such as due to the blades 105 having airfoils that generate lift via a pressure difference between a lower pressure surface and a higher pressure surface in a wind. Because of the configuration of the blades 105 and controls over the orientation of the wind turbine, there is a spinward surface (the lower pressure surface) and a spinward direction toward which the blades 105 provide lift when wind passes over the blades 105 in most wind turbines. "Spinward surface" and "spinward direction" can be used even when the blades 105 are not moving since they are configured to move about the axis of rotation in one direction.

Various installations of the solid water build-up detection apparatus and method of embodiments are illustrated on the exemplary wind turbine 100 shown in FIG. 2. A first example installation 210 in embodiments has at least one electromagnetic radiation sensor 211 configured to be mounted on the hub 104 of the wind turbine 100 adjacent a root of a respective wind turbine blade 105 and to monitor a leading edge of the respective wind turbine blade 105. One such sensor is provided for each blade in an embodiment, though more or fewer can be provided.

A second example installation 220 has at least one electromagnetic radiation sensor 221 configured to be mounted centrally on the nose of the hub 104 of the wind turbine 100 and to monitor one or more respective wind turbine blade 105. In an embodiment, the sensor 221 monitors just one blade 105, but in other embodiments, the sensor 221 monitors all blades of the wind turbine, such as by scanning each blade one at a time. In other embodiments, multiple sensors 221 can be mounted at the nose of the hub 104 so that all blades 105 can be monitored simultaneously.

A third example installation 230 has at least two electromagnetic radiation sensors 231, 232 for each blade 105. Each sensor 231, 232 is configured to monitor a respective main wind direction of the wind turbine blade 105 they monitor and are mounted proximate to a hub 104 of the wind turbine 100. In an embodiment, one of the sensors 231 monitors a leading edge of the wind turbine blade 105, and another of the sensors 232 monitors a lower pressure surface, such as a spinward surface, of the wind turbine blade 105.

A fourth example installation 240 has an electromagnetic radiation sensor 241 configured to be mounted on a nacelle 102 of the wind turbine 100 and monitors surfaces of the wind turbine blades 105 in a windward field of view. Multiple sensors 241 are used in embodiments, though a single sensor 241 can be used to monitor all of the blades 105.

As mentioned above, an embodiment of the invention includes computer-implemented processes or methods and apparatus for practicing such processes, such as the computer processor 30. Additionally, as also mentioned above, an embodiment includes a computer software application or program product that includes computer code, such as object code, source code, or executable code, on tangible media, such as magnetic media (floppy diskettes, hard disc drives, tape, etc.), optical media (compact discs, digital versatile/video discs, magneto-optical discs, etc.), random access memory (RAM), read only memory (ROM), flash ROM, erasable programmable read only memory (EPROM), or any other computer readable storage medium on which the computer program code is stored and with which the computer program code can be loaded into and executed by a computer. When the computer executes the computer program code, it becomes an apparatus for practicing the invention, and on a general purpose microprocessor, specific logic circuits are created by configuration of the microprocessor with computer code segments. A technical effect of the executable instructions is to monitor wind turbine blades for build-up of solid water, such as ice and snow, and to provide an indication of such build-up when detected, such as by triggering an alarm or displaying a graphical representation of the areas in which the build-up has been detected. The graphical representation in an embodiment uses cues, such as color, to emphasize the areas of build-up. Additionally, the graphical representation in an embodiment is superimposed on an image of a respective wind turbine blade.

The computer program code is written in computer instructions executable by the computer processor, such as in the form of software encoded in any programming language. Examples of suitable programming languages include, but are not limited to, assembly language, VHDL (Verilog Hardware Description Language), Very High Speed IC Hardware Description Language (VHSIC HDL), FORTRAN (Formula Translation), C, C++, C#, Java, ALGOL (Algorithmic Language), BASIC (Beginner All-Purpose Symbolic Instruction Code), APL (A Programming Language), ActiveX, HTML (HyperText Markup Language), XML (extensible Markup Language), and any combination or derivative of one or more of these.

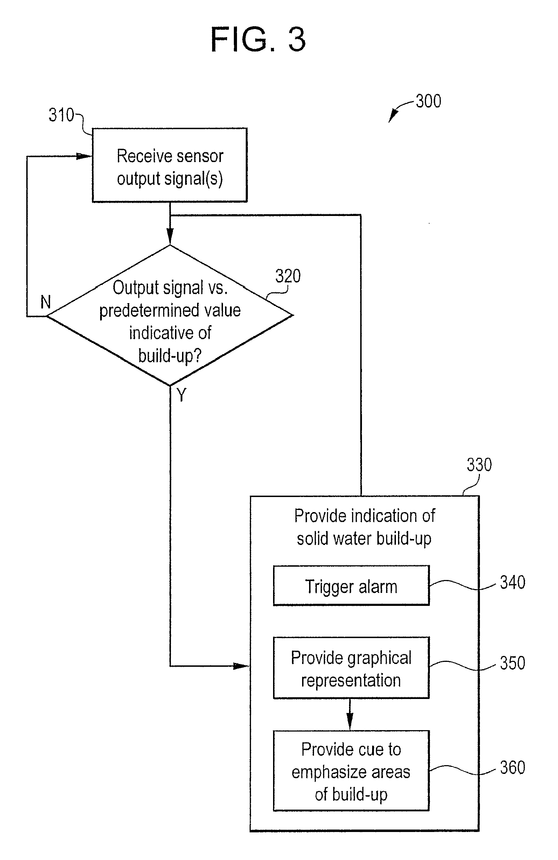

The computer program or software application executes a method 300 schematically illustrated in FIG. 3 in which the output signal(s) 21 of the sensor(s) 20 is (are) received (block 310) and compared to a predetermined value (block 320). If the comparison is not indicative of build-up, then new values of the sensor output signal(s) are received for comparison at block 320 to continue monitoring. If the comparison is indicative of build-up, then an indication of build-up is provided (block 330) such as by triggering an alarm (block 340) or by providing a graphical representation 41 (block 350). In addition, one or more cues 42, 43 can be provided to emphasize areas of build-up (block 360). New values of the sensor output signal(s) are received for comparison at block 320 to continue monitoring.

By using the apparatus and/or system implementing the method according to embodiments, solid water build-up can be detected to prevent damage to, enhance efficiency of, and/or prevent injury to personnel working on wind turbines. Additionally, by enabling detection of ice and snow build-up, the operational season of wind turbines can be extended in areas in which conditions induce such build-up.

While the instant disclosure has been described with reference to one or more exemplary embodiments, it will be understood by those skilled in the art that various changes may be made and equivalents may be substituted for elements thereof without departing from the scope thereof. In addition, many modifications may be made to adapt a particular situation or material to the teachings of the disclosure without departing from the scope thereof. Therefore, it is intended that the disclosure not be limited to the particular embodiment(s) disclosed as the preferred mode contemplated for carrying out this invention, but that the invention will include all embodiments falling within the scope of the appended claims.

Various aspects and embodiments of the present invention are defined by the following numbered clauses:
1. An apparatus comprising:
   a wind turbine comprising a hub supporting a blade;
   a sensor disposed and configured to monitor the blade and to produce a respective output signal; and
   a computer processor disposed and configured to receive the output signal of the sensor and to execute a computer software application to facilitate:
      comparing the output signal to a predetermined value to determine whether solid water is present at the blade; and
      providing an indication of solid water build-up when solid water is present.
2. The apparatus of clause 1 wherein the sensor is mounted on the hub of the wind turbine adjacent a root of the blade and is disposed and configured to monitor a leading edge of the respective blade.
3. The apparatus of any preceding clause further comprising at least one additional blade and a respective sensor mounted on the hub adjacent a respective root of each at least one additional blade, each sensor being disposed and configured to monitor a respective leading edge of each at least one additional blade.
4. The apparatus of any preceding clause wherein the sensor is mounted centrally on a nose of the hub and is disposed and configured to monitor the blade.
5. The apparatus of any preceding clause further comprising at least one additional blade and wherein the sensor is disposed and configured to monitor all of the blades.
6. The apparatus of any preceding clause wherein the sensor is disposed and configured to monitor each of the blades of the wind turbine one at a time.
7. The apparatus of any preceding clause wherein the sensor is a first sensor and is mounted on the blade proximate to the hub and the apparatus further comprises a second sensor mounted on the blade proximate to the hub, wherein each of the sensors is disposed and configured to monitor the blade along a respective direction.
8. The apparatus of any preceding clause wherein one of the first and second sensors is disposed and configured to monitor a leading edge of the blade.
9. The apparatus of any preceding clause wherein the blade has a higher pressure surface and a lower pressure surface and one of the first and second sensors is disposed and configured to monitor a lower pressure surface of the blade.
10. The apparatus of any preceding clause further comprising at least one additional blade and a respective pair of first and second sensors mounted on the hub proximate to a respective root of each at least one additional blade.
11. The apparatus of any preceding clause wherein the wind turbine further comprises a nacelle and the sensor is mounted on the nacelle and is disposed and configured to monitor surfaces of the blade in a windward field of view.
12. The apparatus of any preceding clause wherein providing an indication of solid water build-up comprises displaying an image of the blade with a graphical representation of the output signal of the sensor superimposed on the image of the blade.
13. The apparatus of any preceding clause wherein the sensor is responsive to a reflective characteristic of a surface of the blade.
14. The apparatus of any preceding clause wherein providing an indication of solid water build-up comprises triggering an alarm.
15. The apparatus of any preceding clause wherein the sensor is an infrared sensor.
16. A system comprising:
   a wind turbine comprising a hub supporting a blade;
   a sensor disposed and configured to monitor the blade and to produce a respective output signal;
   a computer, including a computer processor, disposed and configured to receive data carried by the output signal from the sensor, to compare the data to a predetermined value to determine whether solid water is present at the blade, and to provide an indication of solid water build-up when solid water is present at the blade.
17. The system of clause 16 further comprising a graphical display on which the computer displays a graphical representation of the data superimposed over an image of the monitored at least one blade.
18. The system of clause 16 or 17 wherein the indication of solid water build-up is a graphical cue.
19. The system of any one of clauses 16 to 18 wherein the sensor is disposed and configured to monitor a leading edge of the blade.
20. The system of any of clauses 16 to 19 wherein the sensor is an infrared sensor.

## Claims

1. An apparatus (10) comprising:
a wind turbine (100) comprising a hub (104) supporting a blade (105);
a sensor (20) disposed and configured to monitor the blade (105) and to produce a respective output signal (21); and
a computer processor (30) disposed and configured to receive the output signal (21) of the sensor (20) and to execute a computer software application to facilitate:
comparing (320) the output signal (21) to a predetermined value to determine whether solid water is present at the blade (105); and
providing (330) an indication of solid water build-up when solid water is present.

2. The apparatus (10) of claim 1 wherein the sensor (20) is mounted on the hub (104) of the wind turbine (100) adjacent a root of the blade (105) and is disposed and configured to monitor a leading edge of the respective blade (105).

3. The apparatus (10) of any preceding claim further comprising at least one additional blade (105) and a respective sensor (20) mounted on the hub (104) adjacent a respective root of each at least one additional blade (105), each sensor (20) being disposed and configured to monitor a respective leading edge of each at least one additional blade (105).

4. The apparatus (10) of any preceding claim wherein the sensor (20) is mounted centrally on a nose of the hub (104) and is disposed and configured to monitor the blade (105).

5. The apparatus (10) of any preceding claim further comprising at least one additional blade (105) and wherein the sensor (20) is disposed and configured to monitor all of the blades (105).

6. The apparatus (10) of any preceding claim wherein the sensor (20) is a first sensor (20) and is mounted on the blade (105) proximate to the hub (104) and the apparatus (10) further comprises a second sensor (20) mounted on the blade (105) proximate to the hub (104), wherein each of the sensors (20) is disposed and configured to monitor the blade (105) along a respective direction.

7. The apparatus (10) of any preceding claim wherein the wind turbine (100) further comprises a nacelle (102) and the sensor (20) is mounted on the nacelle (102) and is disposed and configured to monitor surfaces of the blade (105) in a windward field of view.

8. The apparatus (10) of any preceding claim wherein providing an indication of solid water build-up comprises displaying an image of the blade (105) with a graphical representation (41) of the output signal (21) of the sensor (20) superimposed on the image of the blade (105).

9. The apparatus (10) of any preceding claim wherein the sensor (20) is responsive to a reflective characteristic of a surface of the blade (105).

10. The apparatus (10) of any preceding claim wherein the sensor (20) is an infrared sensor (20).
